# EUROPEAN PATENT SPECIFICATION

(11) **EP 3 373 372 B1**
(45) Date of publication and mention of the grant of the patent: **26.02.2020**
(21) Application number: 16861783.5
(22) Date of filing: 02.11.2016
(51) Int. Cl.: H01M 8/04, H01M 8/04225, H01M 8/04858, H02J 3/38, H02M 7/48, H02M 7/493, H01M 8/04537

(54) **FUEL CELL SYSTEM AND ASSEMBLY THEREOF**
BRENNSTOFFZELLENSYSTEM UND ANORDNUNG DARAUS
SYSTÈME DE PILES À COMBUSTIBLE ET SON PROCÉDÉ DE COMMANDE

(30) Priority: 05.11.2015 JP 2015217251
(43) Date of publication of application: 12.09.2018
(73) Proprietor: Panasonic Intellectual Property Management Co., Ltd., Osaka-shi, Osaka 540-6207 (JP)
(72) Inventor: TAMURA, Yoshio, Osaka-shi, Osaka 540-6207 (JP); OZEKI, Masataka, Osaka-shi, Osaka 540-6207 (JP)
(74) Representative: Grünecker Patent- und Rechtsanwälte PartG mbB
(86) International application number: PCT/JP2016/004801
(87) International publication number: WO 2017/077711

(56) References cited:
- EP-A1- 3 316 373
- JP-A- 2004 178 877
- JP-A- 2006 244 795
- JP-A- 2007 122 930
- JP-A- 2007 324 140
- JP-A- 2008 098 076
- JP-A- 2009 290 939
- JP-A- 2012 134 031
- US-A1- 2014 089 055

## Description

### TECHNICAL FIELD

The present invention relates to a fuel cell system including a plurality of fuel cell stacks and an assembly of such fuel cell systems.

### BACKGROUND ART

Nowadays, household fuel cell systems to be installed and used in single-family housing, collective housing, etc. are known. The household fuel cell systems are configured to provide electric power to be consumed in households and have an electric power output as low as 0.7 to 1 kW.

To achieve an electric power output of, for example, 3 to 5 kW using such a household fuel cell system, a fuel cell system employing a plurality of fuel cell stacks connected in parallel to obtain the targeted electric power output has been proposed (see Patent Literature 1, for example).

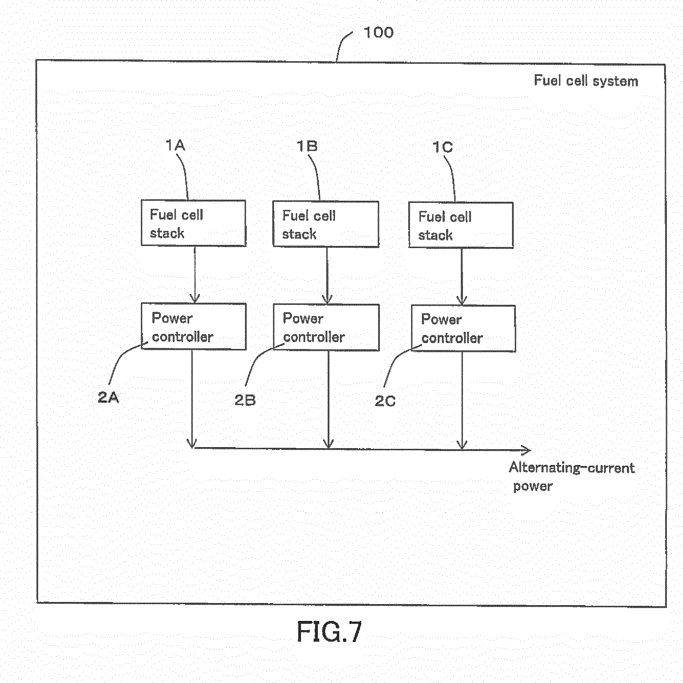

FIG. 7 is a block diagram showing the configuration of the conventional power generation system disclosed in Patent Literature 1. As shown in FIG. 7, the fuel cell system 100 is constituted by fuel cell stacks 1A to 1C and power controllers 2A to 2C.

Direct-current power supplied by the fuel cell stacks 1A to 1C is converted to alternating-current power by the power controllers 2A to 2C implemented, for example, by inverters, and the resulting electric power is supplied to a load connected to the fuel cell system 100.

In the conventional fuel cell system 100, only one of the power controllers 2A to 2C is set as a master that performs constant voltage control of the electric power output, while the other power controllers are set as slaves that perform constant power control of the electric power output. When, for example, the power controller 2A is set as the master that performs constant voltage control of the electric power output, the other power controllers 2B and 2C are set as the slaves that perform constant power control of the electric power output.

Thus, when the fuel cell system 100 is in grid-independent operation without connection to any grid power supply, the slave power controllers 2B and 2C output electric power in conformity with the voltage waveform generated by the master power controller 2A so that the voltage waveform of the output electric power is identical to the voltage waveform generated by the master power controller 2A. This prevents an undesired situation where the voltage waveforms of electric power output by the power controllers 2A to 2C differ from each other, so that unstable electric power is supplied to the load.

With the configuration of the conventional power generation system as described above, however, the power controller set as the master needs to always perform constant voltage control while the fuel cell system is generating electric power, and thus the operating time of the fuel cell stack connected to the power controller set as the master is increased.

Additionally, the configuration of the conventional power generation system takes no account of the fact that the fuel cell stacks deteriorate as their operating times increase, and therefore has the following problem: the fuel cell stack connected to the master power controller deteriorates to the greatest degree, and the fuel cell system becomes unusable upon expiration of the service life of the fuel cell stack connected to the master power controller even if the fuel cell stacks connected to the other power controllers remain normal.

### CITATION LIST

### Patent Literature

Patent Literature 1: JP 2009-290939 A

### SUMMARY OF INVENTION

The present invention has been made to address the conventional problem as described above, and provides a fuel cell system configured to set a master power controller and a slave power controller to enable grid-independent power generation in the event of disruption of grid power supply due to a cause such as power failure and configured to prevent its service life from being shortened with deterioration of a particular fuel cell stack. The present invention also provides an assembly of such fuel cell systems.

Specifically, a fuel cell system according to an exemplary embodiment of the present invention includes: a plurality of fuel cell stacks that generate electric power using a hydrogen-containing gas and an oxidant gas; a plurality of power controllers that are respectively connected to the plurality of fuel cell stacks and that extract electric power generated by the plurality of fuel cell stacks. The fuel cell system according to an exemplary embodiment of the present invention further includes a control device that controls the operation of the plurality of fuel cell stacks and the operation of the plurality of power controllers so that the number of at least either the fuel cell stacks in operation or the power controllers in operation is varied as a function of a load to be driven. In the fuel cell system according to an exemplary embodiment of the present invention, only one of the plurality of power controllers is set as a master power controller, while the one or more power controllers other than the master power controller are each set as a slave power controller. In the fuel cell system according to an exemplary embodiment of the present invention, the master power controller is capable of grid-independent operation during power grid failure. The fuel cell system according to an exemplary embodiment of the present invention is configured so that (i) the power controller set as the master power controller is selected from the plurality of power controllers so that the operating time of the one or more fuel cell stacks connected to the one or more slave power controllers is longer than the operating time of the fuel cell stack connected to the master power controller.

In the thus configured fuel cell system capable of grid-independent operation in the event of power grid failure, the operating time of the fuel cell stack connected to the master power controller can be controlled to the same level as the operating time of the one or more fuel cell stacks connected to the one or more slave power controllers. It is therefore possible to prevent the fuel cell stack connected to the master power controller from deteriorating to a greater degree than the other fuel cell stack(s) to cause shortening of the service life of the fuel cell system.

In the event of power grid failure, only one of the power controllers of the fuel cell system acts as the master power controller and is capable of grid-independent operation by constant voltage control. With this configuration, it is possible to level the operating times of the fuel cell stacks and prevent shortening of the service life of the fuel cell system while preventing an undesired situation where the fuel cell system is unable to output electric power during power failure.

The following feature (ii) can be employed instead of the feature (i) described above: (ii) the fuel cell system according to an exemplary embodiment of the present invention includes voltage measurement units that measure the respective voltages of the plurality of fuel cell stacks, and when the voltage of the fuel cell stack connected to the power controller acting as the master power controller is below a predetermined value, one of the plurality of power controllers other than the power controller having acted as the master power controller is newly set as the master power controller by the control device.

With this configuration, the degree of deterioration of the fuel cell stack connected to the master power controller can be known from the voltage of the fuel cell stack. When the degree of deterioration is determined to be high, the master power controller can be changed from one power controller to another to prevent the fuel cell stack connected to the master power controller from deteriorating to a significantly greater degree than the other fuel cell stack(s), thus preventing shortening of the service life of the fuel cell system.

The fuel cell system according to an exemplary embodiment of the present invention may be configured so that the fuel cell stack connected to the master power controller commences to generate electric power upon start up of the fuel cell system. With this configuration, the master power controller is always in operation while the fuel cell system is generating electric power. Thus, even in the event of power grid failure, electric power can be stably supplied by causing the master power controller to perform constant voltage control,

The fuel cell system according to an exemplary embodiment of the present invention may be configured so that the master power controller is not changed from one of the plurality of power controllers to another power controller during power grid failure. With this configuration, it is possible to prevent failure of stable output of electric power due to disturbance of constant voltage control performed by the master power controller.

The fuel cell system according to an exemplary embodiment of the present invention may be configured so that, in the event of power grid failure, the master power controller determines a voltage waveform to be generated, and the one or more slave power controllers generate a voltage waveform in conformity with the voltage waveform determined by the master power controller.

With this configuration, the voltage waveforms generated by the power controllers can all be made identical in the event of power grid failure. Stable electric power can therefore be supplied even during power failure.

The fuel cell system according to an exemplary embodiment of the present invention may be configured so that when a difference between the operating time of the fuel cell stack connected to the master power controller and the operating time of the fuel cell stack whose operating time is the shortest among the fuel cell stacks connected to the slave power controllers is equal to or greater than a predetermined amount of time, the fuel cell stack whose operating time is the shortest is caused to generate electric power while the power controller connected to the fuel cell stack whose operating time is the shortest is newly set as the master power controller.

With this configuration, the operating time of the fuel cell stack connected to the master power controller can be prevented from becoming longer than the operating time of the other fuel cell stack(s) by more than a predetermined amount of time. It is therefore possible to prevent any particular fuel cell stack from deteriorating to a great degree to cause shortening of the service life of the fuel cell system.

The fuel cell system according to an exemplary embodiment of the present invention may be configured so that the power controller connected to the fuel cell stack whose operating time is the shortest is set as the master power controller upon start up of the fuel cell system. With this configuration, the fuel cell stack whose operating time is the shortest can be selectively operated to level the operating times of the fuel cell stacks and thus lengthen the service life of the fuel cell system.

The fuel cell system according to an exemplary embodiment of the present invention may be configured so that the power controller connected to the fuel cell stack for which a parameter is the highest is set as the master power controller upon start up of the fuel cell system, the parameter being correlated with the voltages of the fuel cell stacks.

With this configuration, the fuel cell stack whose degree of deterioration is the lowest can be selectively operated to level the degrees of operation-induced deterioration of the fuel cell stacks and thus lengthen the service life of the fuel cell system.

A fuel cell system assembly according to an exemplary embodiment of the present invention includes a plurality of fuel cell systems each including: a plurality of fuel cell stacks that generate electric power using a hydrogen-containing gas and an oxidant gas; a plurality of power controllers that are respectively connected to the plurality of fuel cell stacks and that extract electric power generated by the plurality of fuel cell stacks. The fuel cell system assembly according to an exemplary embodiment of the present invention is configured so that the plurality of fuel cell systems operate in conjunction with each other. The fuel cell system assembly according to an exemplary embodiment of the present invention includes an assembly control device that controls the plurality of fuel cell stacks and the plurality of power controllers so that only one of the plurality of power controllers of the plurality of fuel cell systems is set as a master power controller. In the fuel cell system assembly according to an exemplary embodiment of the present invention, the master power controller is capable of grid-independent operation during power grid failure and, in the event of power grid failure, determines a voltage waveform to be generated.

In the thus configured fuel cell system assembly in which a plurality of fuel cell systems operate in conjunction with each other, a different master power controller need not be provided for each fuel cell system, and one master power controller can be set for the whole fuel cell system assembly. This can prevent an undesired situation where the fuel cell systems each perform constant voltage control so that the resulting voltage waveforms interfere with each other to preclude grid-independent operation during power grid failure.

The fuel cell system assembly according to an exemplary embodiment of the present invention may be configured so that: the assembly control device sets, as the master power controller, one of the plurality of power controllers of the plurality of fuel cell systems that is connected to the fuel cell stack whose operating time is the shortest among the plurality of fuel cell stacks of the plurality of fuel cell systems; and the master power controller is not changed from the one power controller to another power controller during power grid failure.

With this configuration, it is possible to prevent failure of stable output of electric power due to disturbance of constant voltage control performed by the master power controller.

### BRIEF DESCRIPTION OF DRAWINGS

FIG. 1 is a block diagram showing the schematic configuration of fuel cell systems according to the first and second embodiments of the present invention.
FIG. 2 is a flowchart showing how the fuel cell system according to the first embodiment of the present invention operates.
FIG. 3 is a block diagram showing the schematic configuration of a fuel cell system according to the third embodiment of the present invention.
FIG. 4 is a flowchart showing how the fuel cell system according to the third embodiment of the present invention operates.
FIG. 5 is a block diagram showing the schematic configuration of a fuel cell system assembly according to the fourth embodiment of the present invention.
FIG. 6 is a flowchart showing how the fuel cell system assembly according to the fourth embodiment of the present invention operates.
FIG. 7 is a block diagram showing the schematic configuration of a conventional power generation system.

### DESCRIPTION OF EMBODIMENTS

Hereinafter, embodiments of the present invention will be described with reference to the drawings. The present invention is not limited by the embodiments described below.

### (First embodiment)

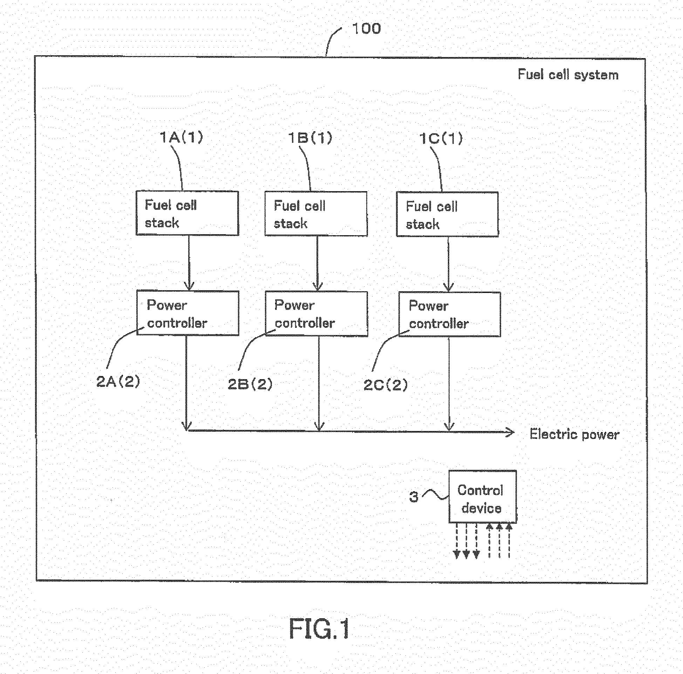

FIG. 1 is a block diagram showing the schematic configuration of a fuel cell system according to the first embodiment of the present invention. In FIG. 1, the fuel cell system 100 includes fuel cell stacks 1A, 1B, and 1C, power controllers 2A, 2B, and 2C, and a control device 3.

The fuel cell stacks 1A to 1C are configured to generate electric power using a hydrogen-containing gas and an oxidant gas. The hydrogen-containing gas and oxidant gas are fed separately from different feeders (not shown). In the present embodiment, pure hydrogen gas is used as the hydrogen-containing gas, and air is used as the oxidant gas. Polymer electrolyte fuel cells are used as the fuel cell stacks.

The power controllers 2A to 2C are connected to the fuel cell stacks 1A to 1C in one-to-one correspondence, and each extract electric power generated by the corresponding one of the fuel cell stacks 1A to 1C. In the present embodiment, inverters that convert direct-current power generated by the fuel cell stacks 1A to 1C to alternating-current power are respectively used as the power controllers 2A to 2C.

The control device 3 may be configured in any manner as long as it fulfils the control function of controlling the fuel cell system 100. In the present embodiment, the control device 3 includes a computing processing unit (not shown) and a storage unit (not shown) storing a control program. For example, a CPU is used as the computing processing unit. As the storage unit there is used, for example, a memory.

Polymer electrolyte fuel cells typically have a structure in which a membrane electrode assembly (MEA) is sandwiched between separators. The MEA typically has a structure in which a gas diffusion layer, a cathode catalyst layer, a polymer electrolyte membrane, an anode catalyst layer, and a gas diffusion layer are stacked. The cell reaction takes place in the catalyst layers each composed of a catalyst, a support supporting the catalyst, and an ionomer (ion-conductive polymer).

It is known that the fuel cell stacks 1A to 1C deteriorate with increasing operating time and the deterioration leads to a decrease in voltage of the fuel cell stacks 1A to 1C. A typical cause of the deterioration is a change in electrode structure due to, for example, poisoning of the cathode catalyst layer by impurities contained in air and poisoning of the anode catalyst layer by impurities contained in the fuel gas. A change in electrode structure of the fuel cell stacks 1A to 1C decreases the efficiency of gas diffusion and of produced water discharge, thus causing a decrease in voltage.

A large decrease in voltage of the fuel cell stacks 1A to 1C renders the fuel cell stacks 1A to 1C unable to output electric power required, so that the service life of the fuel cell stacks 1A to 1C expires. The voltages output by the fuel cell stacks 1A to 1C decrease with increasing operating times of the fuel cell stacks 1A to 1C. The "operating time" refers to a period of time during which each of the fuel cell stacks 1A to 1C generates electric power.

The reference signs assigned to a plurality of the same elements will be described. As for the term "fuel cell stacks 1A to 1C", for example, the suffixes "A", "B", and "C" are added to distinguish between the same elements and refer to three fuel cell stacks 1 (the fuel cell stack 1A, fuel cell stack 1B, and fuel cell stack 1C).

In the following description, when any one or more of the fuel cell stacks 1 are mentioned, it or they may be designated as "fuel cell stack 1" by omitting the suffixes and using the reference number "1" alone. In this case, the term "fuel cell stack 1" may refer to one fuel cell stack 1 or two or more fuel stacks 1.

This way of designation applies also to the power controllers 2. As for the term "power controllers 2A to 2C", for example, the suffixes "A", "B", and "C" are added to distinguish between the same elements and refer to three power controllers 2 (the power controller 2A, power controller 2B, and power controller 2C).

In the following description, when any one or more of the power controllers 2 are mentioned, it or they may be designated as "power controller 2" by omitting the suffixes and using the reference number "2" alone. In this case, the term "power controller 2" may refer to one power controller 2 or two or more power controllers 2.

In the fuel cell system 100, the number of the fuel cell stacks 1 that are in operation to generate electric power is varied as a function of the amount of electric power required to be generated. When the amount of electric power required to be generated by the fuel cell system 100 is small, not all the fuel cell stacks 1 are operated to generate electric power, but a minimum number of the fuel cell stacks 1 needed to generate the required amount of electric power are operated. When the amount of electric power required to be generated is large, a larger number of fuel cell stacks 1 are used to generate electric power (all of the fuel stacks 1 may be used depending on the amount of electric power required to be generated).

When the fuel cell system 100 is in grid-connected operation with connection to the grid power supply provided, for example, by an electric power company, the power controller 2 outputs electric power with a voltage waveform identical to the voltage waveform of the grid power.

In the event of disruption of the grid power supply due to a cause such as power failure, the power controller 2 needs to determine the voltage waveform of electric power to be output. If each of the plurality of power controllers 2 determines the voltage waveform of electric power to be output, the voltage waveform finally output from the fuel cell system 100 is distorted so that stably available electric power cannot be generated.

Therefore, only one of the plurality of power controllers 2 is set as a master power controller 2 which determines the voltage waveform during power failure, while the other power controllers 2 are set as slave power controllers 2 which are subordinate to the master power controller 2 and output electric power with a voltage waveform identical to the voltage waveform determined by the master power controller 2.

Thus, the fuel cell system 100 is capable of performing grid-independent power generation in the event of power grid failure.

The master power controller 2 needs to be always prepared for power failure during power generation by the fuel cell system 100 and, in the event of power failure, the master power controller 2 needs to determine the voltage waveform and output electric power. When the fuel cell system 100 generates electric power, therefore, the fuel cell stack 1 connected to the master power controller 2 needs to generate electric power.

That is why if a particular one of the power controllers 2 is fixed as the master power controller 2, the operating time of the fuel cell stack 1 connected to the particular power controller 2 becomes longer than the operating times of the other fuel cell stacks 1, and the particular fuel cell stack 1 deteriorates markedly.

This has the consequence that the fuel cell system 100 becomes unable to operate at the time the service life of the particular fuel cell stack 1 expires. The manner of setting the master power controller 2 should therefore be such that the master power controller 2 can be changed from one power controller 2 to another power controller 2.

In the present embodiment, the timing at which the master power controller 2 is changed from one power controller 2 to another is set by the control device 3 based on the operating times of the fuel cell stacks 1.

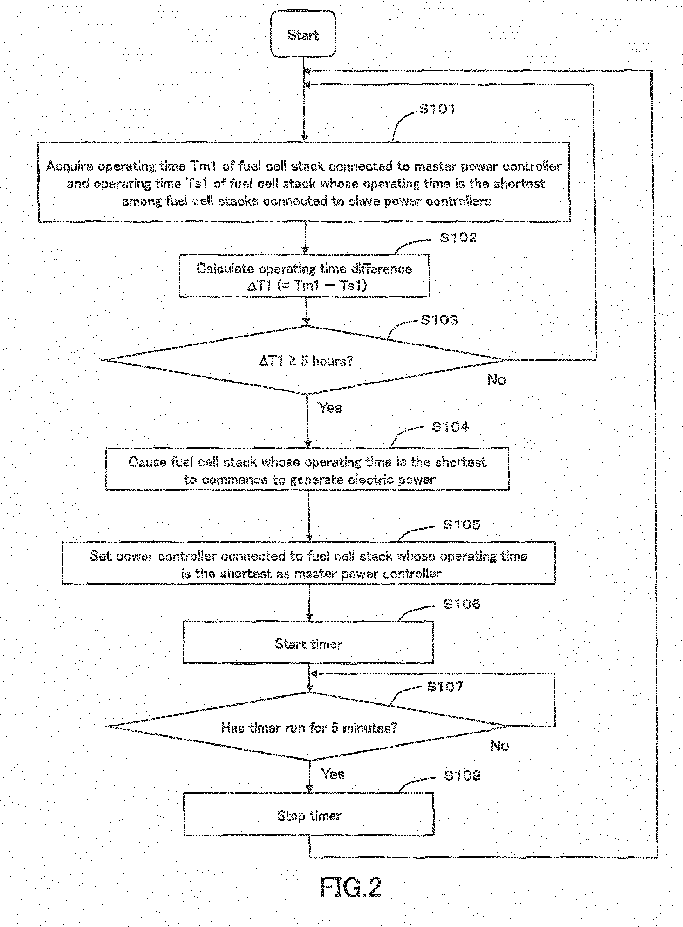

The operation and effect of the fuel cell system 100 configured as described above will be described hereinafter with reference to FIG. 2.

FIG. 2 is a flowchart showing how the fuel cell system according to the first embodiment of the present invention operates. The process (steps S) shown in the flowchart of FIG. 2 is executed under control by the control device 3.

As shown in FIG. 2, the control device 3 determines, upon power-on of the fuel cell system 100, that the fuel cell system 100 has started to operate, and thereafter always carries out the process described below.

The following description is given on the assumption that the current master power controller 2 is the power controller 2A.

The control device 3 acquires information of the operating time Tm1 of the fuel cell stack 1A connected to the master power controller 2A and also acquires information of the operating time Ts1 of the fuel cell stack 1 (which is supposed to be the fuel cell stack 1B in this example) whose operating time is the shortest among the fuel cell stacks 1 connected to the slave power controllers 2 (step S101).

Next, the control device 3 calculates a difference ΔT1 between the operating time of the fuel cell stack 1A and the operating time of the fuel cell stack 1B by subtracting Tsl from Tm1 (step S102). When ΔT1 calculated is equal to or greater than a predetermined amount of time (step S103), the control device 3 causes the fuel cell stack 1 (the fuel cell stack 1B in this example) that is not currently in operation and whose operating time is the shortest to commence to generate electric power (step S104). The predetermined amount of time is set to five hours in the present embodiment.

When ΔT1 calculated in step S102 is less than the predetermined amount of time, namely five hours (No in step S103), the process returns to step S101 and is repeated from step S101.

After the fuel cell stack 1B commences to generate electric power in step S104, the power controller 2B connected to the fuel cell stack 1B, which is the fuel cell stack 1 whose operating time is the shortest, is set as the master power controller 2 (step S105).

The control process from step S101 to step S105 is carried out at time intervals longer than the time required for power generation by the fuel cell stacks 1. In the present embodiment, for example, a timer is set and started (step S106) to carry out the control process at time intervals of five minutes. Next, the process waits for the timer to run for five minutes (step S107), and after a lapse of five minutes, the timer is stopped (step S108). The process then returns to step S101 and is repeated from step S101.

With this configuration (control process), the master power controller 2 can be changed from one power controller 2 to another to prevent the operating time of the fuel cell stack 1 connected to the master power controller 2 from becoming longer than the operating times of the other fuel cell stacks 1 by more than a predetermined amount of time (for example, five hours).

Additionally, since the power controller 2 connected to the fuel cell stack 1 whose operating time is the shortest is newly set as the master power controller 2, the operating times of all the fuel cell stacks 1 can be levelled.

It is thus possible to prevent marked deterioration of any particular fuel cell stack 1 and thereby lengthen the service life of the fuel cell system 100 while enabling the fuel cell system 100 to perform grid-independent power generation in the event of power grid failure.

In the event of power grid failure, the master power controller 2 takes charge of determining the voltage waveform of electric power to be generated. Thus, if the change of the master power controller 2 is performed during power failure, the power controller 2 that determines the voltage waveform changes from one power controller 2 to another. This can distort the voltage waveform transiently and preclude output of stable electric power.

It is therefore desirable to operate the fuel cell system 100 so that the change of the master power controller 2 is not performed during power grid failure, even if the conditions for the change of the master power controller 2 are met.

The change of the master power controller 2 is performed upon restoration of normal power supply from the power grid, if the conditions for the change of the master power controller 2 are met. Settings can be made to stop the control process shown in FIG. 2 in the event of power grid failure.

The number of the fuel cell stacks 1 and the number of the power controllers 2 are not limited to three, and may be any number of two or more.

The fuel cell stacks 1A to 1C are not limited to polymer electrolyte fuel cells and may be fuel cells of any type. For example, solid oxide fuel cells or phosphoric-acid fuel cells can be used.

The hydrogen-containing gas used in power generation by the fuel cell stacks 1A to 1C may be one such as city gas or LPG which is produced by reforming a hydrocarbon raw material or may be pure hydrogen gas.

The power controllers 2A to 2C are not limited to inverters that convert direct-current power to alternating-current power and may be controllers that convert direct-current power having a voltage to direct-current power having a different voltage.

The operating time may be a cumulative power generation time or continuous power generation time. Furthermore, the operating time is not limited to the period of time during which the fuel cell stack 1 generates electric power, and may be, for example, the period of time during which the oxidant gas is fed to the fuel cell stack 1 or the period of time during which the hydrogen-containing gas is fed to the fuel cell stack 1.

The predetermined amount of time used in step S103 for the change of the master power controller 2 is not limited to five hours and may be any amount of time as long as marked deterioration of any particular fuel cell stack 1 is prevented. However, if the predetermined amount of time is set to a small amount of time, start up and shutdown of the fuel cell stack 1 could be repeated very often; thus, the predetermined amount of time is desirably set on the hour time scale rather than on the second or minute time scale.

In the fuel cell system 100, the process shown in the flowchart of FIG. 2 may be always carried out after power-on of the fuel cell system 100 on the assumption that the fuel cell system 100 starts to operate upon the power-on. Alternatively, the process may be carried out at start up and during power generation or only during power generation.

When step S104 is executed in the fuel cell system 100 during power generation, the fuel cell stack 1 that commences to generate electric power is the fuel cell stack 1 whose operating time is the shortest.

The reason why a difference in operating time occurs among the fuel cell stacks 1A to 1C as the fuel cell system 100 generates electric power is that at least one of the fuel cell stacks 1 is not in operation during power generation and this produces a difference between the operating time of the fuel cell stack 1 not in operation and the operating time of the fuel cell stack 1 connected to the master power controller 2.

It is desirable that the fuel cell system 100 be configured, when the change of the master power controller 2 is performed in step S105, to stop the operation of the fuel cell stack 1 having been connected to the master power controller 2 before the change. This configuration prevents further lengthening of the operating time of the fuel cell stack 1 having operated for a long period of time.

Additionally, the fuel cell stacks 1 may be connected in series, although the fuel cell stacks 1 are connected in parallel in the fuel cell system 100 according to the present embodiment.

In the present embodiment, the operating time of the fuel cell stack 1 connected to the master power controller 2 transiently becomes longer than the operating times of the fuel cell stacks 1 connected to the slave power controllers 2; however, no problem concerning the durability of the fuel cell stacks 1 arises because setting of the master power controller 2 is made so that the fuel cell stack 1 connected to the master power controller 2 will be the fuel cell stack 1 whose operating time is the shortest.

The timing at which the master power controller 2 is set is not limited to that described above. In the fuel cell system 100, the control device 3 may be configured to control the operation of the fuel cell stacks 1 and the operation of the power controllers 2 so that the operating time of the fuel cell stack 1 connected to the master power controller 2 is always kept from becoming the longest among the fuel cell stacks 1.

### (Second embodiment)

The block diagram showing the schematic configuration of a fuel cell system according to the second embodiment of the present invention is the same as that presented in FIG. 1 for the first embodiment. The operation of the fuel cell system 100 in commencing to generate electric power upon start up will be described with reference to FIG. 1.

The reference signs assigned to a plurality of the same elements will be described. As for the term "fuel cell stacks 1A to 1C", for example, the suffixes "A", "B", and "C" are added to distinguish between the same elements and refer to three fuel cell stacks 1 (the fuel cell stack 1A, fuel cell stack 1B, and fuel cell stack 1C).

In the following description, when any one or more of the fuel cell stacks 1 are mentioned, it or they may be designated as "fuel cell stack 1" by omitting the suffixes and using the reference number "1" alone. In this case, the term "fuel cell stack 1" may refer to one fuel cell stack 1 or two or more fuel stacks 1.

This way of designation applies also to the power controllers 2A to 2C. As for the term "power controllers 2A to 2C", for example, the suffixes "A", "B", and "C" are added to distinguish between the same elements and refer to three power controllers 2 (the power controller 2A, power controller 2B, and power controller 2C).

In the following description, when any one or more of the power controllers 2 are mentioned, it or they may be designated as "power controller 2" by omitting the suffixes and using the reference number "2" alone. In this case, the term "power controller 2" may refer to one power controller 2 or two or more power controllers 2.

When the fuel cell system 100 is operated for the first time, one of the power controllers 2 needs to be set as the master power controller 2. The way of setting the master power controller 2 when there is a difference in operating time among the fuel cell stacks 1 is to set the power controller 2 corresponding to the fuel cell stack 1 whose operating time is the shortest as the master power controller 2.

When the operating time is the same among all the fuel cell stacks 1, identification numbers assigned to all the fuel cell stacks 1 in advance are referenced, and the power controller 2 connected to the fuel cell stack 1 having the smallest identification number is set as the master power controller 2.

Thus, even when the fuel cell system 100 is operated for the first time, setting of the master power controller can be made to prevent an undesired situation where the fuel cell system 100 is incapable of grid-independent operation in the event of power grid failure.

When the fuel cell system 100 having been operated and stopped once or more is started up again, the fuel cell stack 1 connected to the master power controller 2 set in the previous operation is caused to commence to generate electric power upon the start up of the fuel cell system 100. This enables the fuel cell system 100 to operate in such a manner that the master power controller 2 is always in operation during power generation.

In the present embodiment, as described above, the master power controller 2 is invariably set at start up. Thus, the fuel cell system 100 is capable of stably performing grid-independent power generation in the event of power grid failure.

The means used in the first time operation of the fuel cell system 100 to identify the fuel cell stacks 1 among all of which the operating time is the same is not limited to numbers and may be symbols or the like.

Identification numbers may be assigned to the power controllers 2 in advance, and the power controller 2 having the smallest identification number may be set as the master power controller 2. Any means can be employed as long as it enables determination of which power controller 2 should be set as the master power controller.

When the fuel cell system 100 is started up, the power controller 2 connected to the fuel cell stack 1 whose operating time is the shortest may be set as the master power controller 2, and the fuel cell stack 1 whose operating time is the shortest may commence to generate electric power. This enables to level the operating times of the fuel cell stacks 1 at start up.

### (Third embodiment)

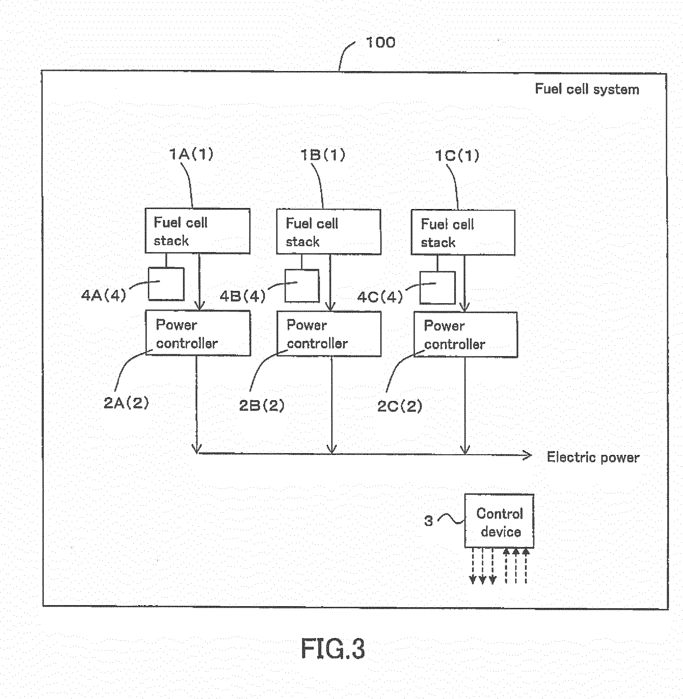

The configuration of a fuel cell system according to the third embodiment of the present invention will be described with reference to FIG. 3. FIG. 3 is a block diagram showing the schematic configuration of the fuel cell system according to the third embodiment of the present invention. The components identical to those of the first embodiment are denoted by the same reference signs and will not be described again.

As shown in FIG. 3, the fuel cell system 100 according to the third embodiment differs from that of the first embodiment by including voltage measurement units 4A, 4B, and 4C that measure the respective voltages of the fuel cell stacks 1A to 1C.

The reference signs assigned to a plurality of the same elements will be described. As for the term "voltage measurement units 4A, 4B, and 4C", for example, the suffixes "A", "B", and "C" are added to distinguish between the same elements and refer to three voltage measurement units 4 (the voltage measurement unit 4A, voltage measurement unit 4B, and voltage measurement unit 4C).

In the following description, when any one or more of the voltage measurement units 4 are mentioned, it or they may be designated as "voltage measurement unit 4" by omitting the suffixes and using the reference number "4" alone. In this case, the term "voltage measurement unit 4" may refer to one voltage measurement unit 4 or two or more voltage measurement units 4.

It is sufficient for the voltage measurement unit 4 to measure the voltage of the fuel cell stack 1. In the present embodiment, a voltmeter that measures the total voltage output by the fuel cell stack 1 is used.

The operations of the components constituting the fuel cell system 100 in the present embodiment differ from those in the first embodiment in that the control device 3 employs the voltage of the fuel cell stack 1 connected to the power controller 2 acting as the master power controller, rather than the operating time of the fuel cell stack 1, in performing control to change the master power controller 2 from one power controller 2 to another power controller 2 having acted as a slave power controller. The operations of the other components are the same as those in the first embodiment and will not therefore be described again.

As the fuel cell stack 1 deteriorates, for example, with increasing operating time, the voltage output by the fuel cell stack 1 decreases. In the present embodiment, the degree of deterioration of the fuel cell stack 1 is determined from the absolute value of the present voltage of the fuel cell stack 1.

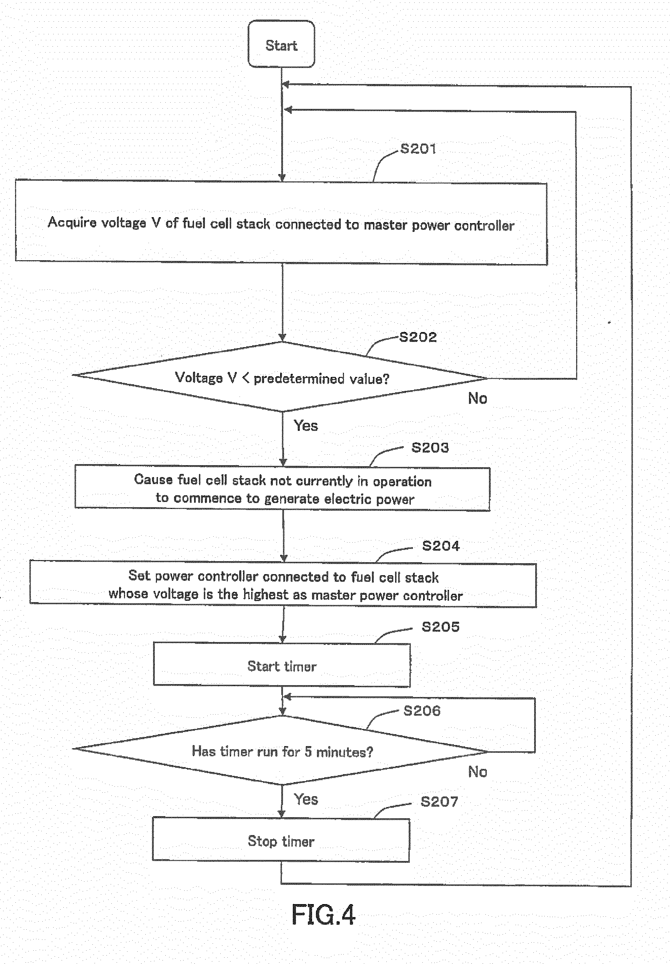

The operation and effect of the fuel cell system 100 configured as described above will be described with reference to FIG. 4.

FIG. 4 is a flowchart showing how the fuel cell system according to the third embodiment of the present invention operates. The process (steps S) shown in the flowchart of FIG. 4 for the fuel cell system 100 is executed under control by the control device 3. As shown in FIG. 4, the control device 3 determines, upon power-on of the fuel cell system 100, that the fuel cell system 100 has started to operate, and thereafter always carries out the process described below.

The following descriptions is given on the assumption that the current master power controller 2 is the power controller 2A.

The control device 3 measures the voltage V of the fuel cell stack 1A connected to the master power controller 2A with the use of the voltage measurement unit 4A and acquires information of the voltage V (step S201). When the voltage V is below a predetermined value (Yes in step S202), the control device 3 causes a fuel cell stack 1 not currently in operation to commence to generate electric power (step S203).

When the fuel cell stack 1 whose voltage is the highest is not currently in operation, the fuel cell stack 1 is caused to commence to generate electric power. When the voltage V is equal to or higher than the predetermined value (No in step S202), the process returns to step S201 and is repeated from step S201.
period After carrying out step S203, the control device 3 sets the power controller 2 (which is supposed to be the power controller 2B in this example) connected to the fuel cell stack 1 (the fuel cell stack 1B in this example) whose voltage is the highest as the master power controller 2 (step S204).

The control process from step S201 to step S204 is carried out at time intervals longer than the time required for power generation by the fuel cell stacks 1. In the present embodiment, for example, the control device 3 sets a timer and starts the timer (step S205) to carry out the control process at time intervals of five minutes. Next, the control device 3 waits for the timer to run for five minutes (step S206), and after a lapse of five minutes (Yes in step S206), stops the timer (step S207). The process then returns to step S201 and is repeated from step S201.

In the present embodiment, as described above, the change of the master power controller 2 is performed to prevent the voltage of the fuel cell stack 1 connected to the master power controller 2 from falling much below the predetermined value.

Additionally, as previously described, the fuel cell system 100 is configured so that the power controller 2 connected to the fuel cell stack 1 whose voltage is the highest and whose degree of deterioration is the lowest is newly set as the master power controller 2. This enables to level the degrees of deterioration of all the fuel cell stacks 1.

Thus, the fuel cell system 100 of the present embodiment can prevent any particular fuel cell stack 1 from deteriorating markedly. The fuel cell system 100 can therefore have a lengthened service life while being capable of grid-independent power generation in the event of power grid failure.

In the present embodiment, the fuel cell stack 1 connected to the master power controller 2 commences to generate electric power upon start up of the fuel cell system 100 so that the master power controller 2 is always in operation during power generation. However, the way of start up is not limited thereto.

For example, when the fuel cell system 100 is started up, the power controller 2 connected to the fuel cell stack 1 for which a parameter correlated with the voltages of the fuel cell stacks 1 is the highest may be set as the master power controller 2, and the fuel cell stack 1 for which the parameter correlated with the voltages of the fuel cell stacks 1 is the highest may commence to generate electric power. This enables to level the voltages of the fuel cell stacks 1 at start up.

The parameter correlated with the voltages of the fuel cell stacks 1 may be the cell voltage of each fuel cell stack 1, may be the total voltage output by each fuel cell stack 1, or may be the operating time of each fuel cell stack 1.

When the fuel cell stacks 1 are not in power generation operation, the voltages to be output by the fuel cell stacks 1 during power generation cannot be known. Thus, the voltages of the fuel cell stacks 1 in the previous power generation operation may be stored, and the fuel cell stack 1 whose voltage is the highest may be determined based on the stored voltages.

In the event of power grid failure, the master power controller 2 takes charge of determining the voltage waveform of electric power to be generated. Thus, if the change of the master power controller 2 is performed during power failure, the power controller 2 that determines the voltage waveform changes from one power controller 2 to another. This can distort the voltage waveform transiently and preclude output of stable electric power.

It is therefore desirable to operate the fuel cell system 100 so that the change of the master power controller 2 is not performed during power grid failure, even if the conditions for the change of the master power controller 2 are met. The change of the master power controller 2 is performed upon restoration of normal power supply from the power grid, if the conditions for the change of the master power controller 2 are met.

The voltage measurement unit 4 may be configured to measure the total voltage output from both ends of the fuel cell stack 1. The voltage measurement unit 4 may be configured to measure the voltage of each of the cells included in the fuel cell stack 1. The voltage measurement unit 4 may be configured to measure the voltage of one cell as a representative of the fuel cell stack 1. The kind of the voltage of the fuel cell stack 1 measured by the voltage measurement unit 4 is not limited, as long as the degree of deterioration of the fuel cell stack 1 can be known by using the voltage measured by the voltage measurement unit 4.

The measure used to determine the deterioration of the fuel cell stack 1 is not limited to the absolute value of the voltage of the fuel cell stack 1 and may be the amount or rate of a decrease in voltage from that at the start of operation. Any measure may be used as long as the degree of deterioration of the fuel cell stack 1 can be detected by using the voltage of the fuel cell stack 1.

It is desirable that the predetermined value employed in step S202 be varied as a function of the operation state instead of being constant. For example, it is desirable to set the predetermined value to a voltage value lower by a given amount than the voltage value of the fuel cell stack 1 whose voltage is the highest.

In selecting the fuel cell stack 1 whose voltage is the highest in step S204, the present voltages of the fuel cell stacks 1 generating electric power may be used, or the voltage values measured in the previous power generation operation may be used. Voltages obtained at any timing may be used as long as the fuel cell stack 1 whose degree of deterioration is the lowest can be determined.

### (Fourth embodiment)

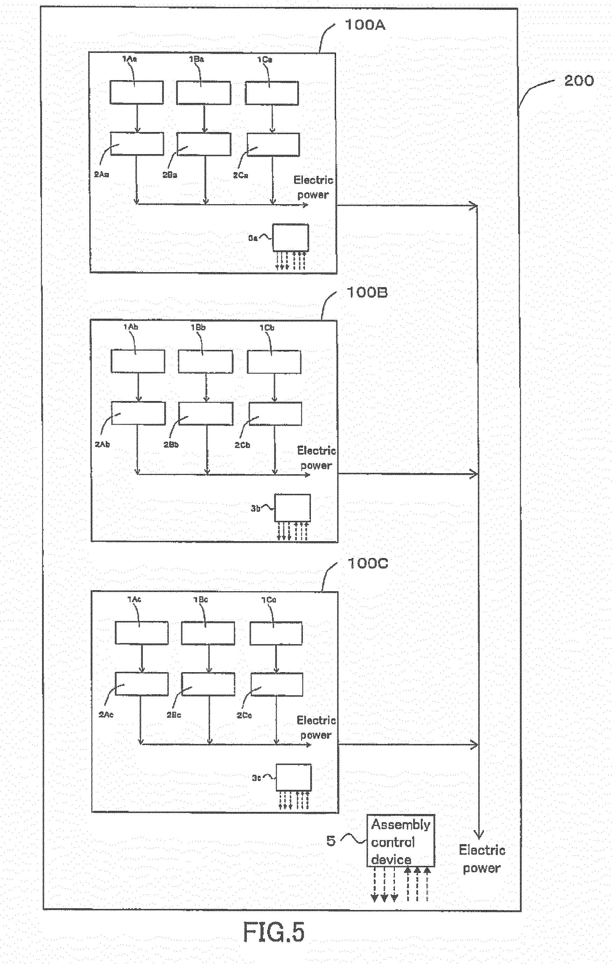

The configuration of a fuel cell system assembly according to a fourth embodiment of the present invention will be described with reference to FIG. 5. FIG. 5 is a block diagram showing the schematic configuration of the fuel cell system assembly according to the fourth embodiment of the present invention.

As shown in FIG. 5, the fuel cell system assembly 200 according to the fourth embodiment is an assembly of a plurality of fuel cell systems 100. The fuel cell system assembly 200 includes fuel cell systems 100A, 100B, and 100C having the same configuration as the fuel cell system of the first embodiment and an assembly control device 5.

Hereinafter, differences from the first embodiment will be mainly described.

The components constituting the fuel cell systems 100A, 100B, and 100C of the fuel cell system assembly 200 according to the present embodiment are identical to those of the first embodiment. The components identical to those of the first embodiment are denoted by the same reference signs and will not be described again.

The fuel cell system 100A includes fuel cell stacks 1Aa, 1Ba, and 1Ca, power controllers 2Aa, 2Ba, and 2Ca, and a control device 3a. Likewise, the fuel cell system 100B includes fuel cell stacks 1Ab, 1Bb, and 1Cb, power controllers 2Ab, 2Bb, and 2Cb, and a control device 3b, and the fuel cell system 100C includes fuel cell stacks 1Ac, 1Bc, and 1Cc, power controllers 2Ac, 2Bc, and 2Cc, and a control device 3c.

The way of assigning reference signs will now be described. The reference signs assigned to the components of the fuel cell systems 100A to 100C are suffixed with the letters from "a" to "c" respectively corresponding to the fuel cell systems 100A to 100C to clarify which fuel cell system 100 includes the components. For example, the fuel cell stack 1B included in the fuel cell system 100C is designated as the "fuel cell stack 1Bc".

When the term "fuel cell stack 1" is used, what is referred to by the term is not limited to a particular one of the fuel cell stacks 1. The term "fuel cell stack 1" may refer to any one of the fuel cell stacks 1 or two or more of the fuel cell stacks 1. When the term "fuel cell stack 1B" is used, the term is not intended to specify which of the fuel cell systems 100A to 100C includes the fuel cell stack referred to by the term. The term "fuel cell stack 1B" is used to refer to the fuel cell stack 1B of any one or more of the fuel cell systems 100A to 100C, and may refer to one of the fuel cell stacks 1B or two or more of the fuel cell stacks 1B.

When any particular one of the fuel cell stacks 1 (the fuel cell stack 1Bc, for example) of any one of the fuel cell systems 100A to 100C (the fuel cell system 100C, for example) is to be specified, the particular fuel cell stack is referred to by the term "fuel cell stack 1Bc" or the like. In the following description, when any one or more of the fuel cell systems 100 are mentioned, it or they may be designated as "fuel cell system 100" by omitting the suffixes and using the reference number "100" alone. In this case, the term "fuel cell system 100" may refer to one fuel cell system 100 or two or more fuel cell systems 100.

It is sufficient for the assembly control device 5 to fulfil the control function of controlling the fuel cell system assembly 200. The assembly control device 5 includes a computing processing unit (not shown) and a storage unit (not shown) storing a control program. For example, a CPU is used as the computing processing unit. As the storage unit there is used, for example, a memory.

The fuel cell system assembly 200 is constructed by assembling the fuel cell system 100A, fuel cell system 100B, and fuel cell system 100C together. The fuel cell system assembly 200 combines together electric power generated by the fuel cell systems 100 (fuel cell systems 100A, 100B, and 100C) and supplies the resultant electric power to the outside of the fuel cell system assembly 200.

When the fuel cell system assembly 200 is in grid-connected operation with connection to the grid power supply provided, for example, by an electric power company, the electric power is generated with a voltage waveform identical to the voltage waveform of the grid power. In the event of power grid failure, the voltage waveform of the grid power cannot be known; thus, to perform grid-independent power generation, the fuel cell system assembly 200 needs to determine the voltage waveform of electric power to be generated.

If two or more of the power controllers 2 included in the fuel cell system assembly 200 each determine the voltage waveform of electric power to be output, the resulting voltage waveforms interfere with each other to preclude normal power generation. In the event of power grid failure, therefore, only one of the power controllers 2 of the fuel cell system assembly 200 is allowed to determine the voltage waveform to be generated, thereby enabling stable power generation.

The power controller 2 that determines the voltage waveform in the event of power grid failure is set as a master power controller 2, and the other power controllers 2 are set as slave power controllers 2 subordinate to the master power controller. The slave power controllers 2 output electric power with a voltage waveform identical to the voltage waveform determined by the master power controller 2.

The master power controller 2 needs to be always prepared for power failure during power generation by the fuel cell system assembly 200 and, in the event of power failure, the master power controller 2 needs to determine the voltage waveform. When the fuel cell system assembly 200 generates electric power, therefore, the fuel cell stack 1 connected to the master power controller 2 needs to generate electric power.

That is why if a particular power controller 2 is fixed as the master power controller 2, the operating time of the fuel cell stack 1 connected to the particular power controller 2 becomes longer than the operating times of the other fuel cell stacks 1, and the particular fuel cell stack 1 deteriorates markedly.

This has the consequence that the fuel cell system assembly 200 becomes unable to operate at the time the service life of the particular fuel cell stack 1 expires. The manner of setting the master power controller 2 should therefore be such that the master power controller 2 can be changed from one power controller 2 to another power controller 2 before any particular fuel cell stack 1 deteriorates markedly.

In the present embodiment, the timing at which the master power controller 2 is changed from one power controller 2 to another is determined using the operating times of the fuel cell stacks 1.

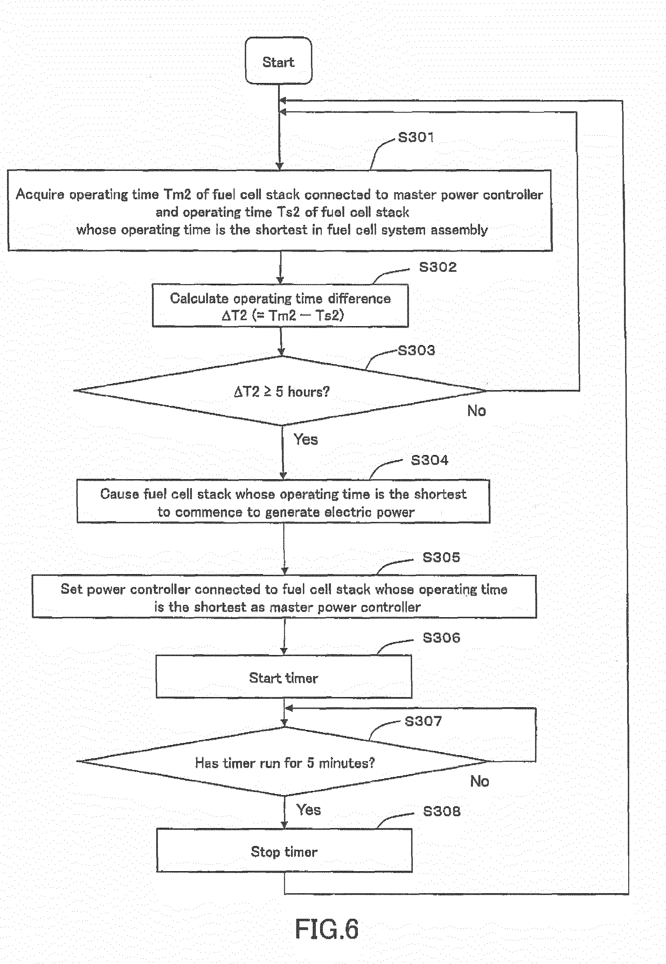

The operation and effect of the fuel cell system assembly 200 configured as described above will be described hereinafter with reference to FIG. 6.

FIG. 6 is a flowchart showing how the fuel cell system assembly according to the fourth embodiment operates. The process shown in the flowchart of FIG. 6 is executed under control by the assembly control device 5.

As shown in FIG. 6, the assembly control device 5 determines, upon power-on of the fuel cell system assembly 200, that the fuel cell system assembly 200 has started to operate, and thereafter always carries out the process described below.

First, the assembly control device 5 acquires information of the operating time Tm2 of the fuel cell stack 1 (which is supposed to be the fuel cell stack 1Cc in this example) connected to the master power controller 2 (the power controller 2Cc in this example) and also acquires information of the operating time Ts2 of the fuel cell stack 1 (which is supposed to be the fuel cell stack 1Ab in this example) whose operating time is the shortest in the fuel cell system assembly 200 (step S301).

Next, the assembly control device 5 calculates a difference ΔT2 (hereinafter referred to as "operating time difference ΔT2") between the operating time Tm2 and the operating time Ts2 by subtracting Ts2 from Tm2 (step S302). Next, the assembly control device 5 determines whether the operating time difference ΔT2 is equal to or greater than a predetermined amount of time (step S303). When the operating time difference ΔT2 is equal to or greater than the predetermined amount of time (Yes in step S303), the process proceeds to step S304. When the operating time difference ΔT2 is smaller than the predetermined amount of time, the process returns to step S301 and is repeated from step S301. The predetermined amount of time is set to five hours in the present embodiment.

When the process proceeds to step S304, the assembly control device 5 causes the fuel cell stack 1Ab whose operating time is the shortest to commence to generate electric power (step S304). After the fuel cell stack 1 commences to generate electric power, the power controller 2Ab connected to the fuel cell stack 1Ab whose operating time is the shortest is set as the master power controller 2 (step S305). In this manner, the master power controller 2 can be changed from the power controller 2Cc to the power controller 2Ab.

The control process from step S301 to step S305 is carried out at time intervals longer than the time required for power generation by the fuel cell stacks 1. In the present embodiment, for example, a timer is set and started (step S306) to carry out the control process at time intervals of five minutes. Next, the process waits for the timer to run for five minutes (step S307), and after a lapse of five minutes (Yes in step S307), the timer is stopped (step S308). The process then returns to step S301 and is repeated from step S301.

In the present embodiment, when power grid failure occurs during execution of the control process shown in FIG. 6, the change of the master power controller 2 is not performed until the power failure is resolved, even if the conditions for the change of the master power controller 2 are met. The reason for this is that the change of the master power controller 2 during power failure can distort the voltage waveform determined by the master power controller 2.

It is desirable to stop the control process shown in FIG. 6 during power failure and restart the control process shown in FIG. 6 upon resolution of the power failure.

In the present embodiment, as described above, the change of the master power controller 2 is performed to prevent the operating time of the fuel cell stack 1 connected to the master power controller 2 from becoming longer than the operating times of the other fuel cell stacks 1 by more than a predetermined amount of time.

Additionally, since the power controller 2 connected to the fuel cell stack 1 whose operating time is the shortest is newly set as the master power controller 2, the operating times of all the fuel cell stacks 1 can be levelled.

Thus, according to the present embodiment, it is possible to prevent any particular fuel cell stack 1 from deteriorating markedly and thereby lengthen the service life of the fuel cell system assembly 200 while enabling the fuel cell system assembly 200 to perform grid-independent power generation in the event of power grid failure.

The number of the fuel cell systems 100 constituting the fuel cell system assembly 200 is not limited to three, although the number in the present embodiment is three. The fuel cell system assembly 200 may be configured as an assembly of any number of two or more fuel cell systems 100.

The means for feeding the hydrogen-containing gas and oxidant gas to each fuel cell stack 1 may be configured in any manner as long as the means is capable of stable feed of the hydrogen-containing gas and oxidant gas.

In the fuel cell system assembly 200, for example, feeders such as pumps may be provided for each fuel cell stack 1. Alternatively, in the fuel cell system assembly 200, feeders such as pumps may be provided for each fuel cell system 100, and the hydrogen-containing gas and oxidant gas may each be divided in the fuel cell system 100 into separate streams which are respectively fed to the fuel cell stacks 1. It is also conceivable that a single hydrogen-containing gas feeder and a single oxidant gas feeder are provided for the whole of the fuel cell system assembly 200, and the hydrogen-containing gas delivered from the single hydrogen-containing gas feeder and the oxidant gas delivered from the single oxidant gas feeder are each divided in the fuel cell system assembly 200 into separate streams which are respectively fed to the fuel cell stacks 1.

In the present embodiment, an exemplary configuration is described in which each fuel cell system 100 of the fuel cell system assembly 200 includes a control device 3 and in which the fuel cell system assembly 200 includes the assembly control device 5 for controlling the whole of the fuel cell system assembly 200. However, the fuel cell system assembly 200 may be configured to cause the assembly control device 5 to control all of the fuel cell systems 100 without providing the control device 3 for each fuel cell system 100. In this case, the control concerning the setting of the master power controller by the control device 3 of each fuel cell system 100 is not performed.

In the present embodiment, the operating time of the fuel cell stack 1 is used as a measure to define the conditions for the change of the master power controller 2. However, the measure used to define the conditions for the change of the master power controller 2 is not limited to the operating time, and may be any measure from which the degree of deterioration of the fuel cell stack 1 can be known. The measure may be, for example, the voltage of the fuel cell stack 1.

The operating time may be a cumulative power generation time or continuous power generation time. Furthermore, the operating time is not limited to the period of time during which the fuel cell stack 1 generates electric power, and may be, for example, the period of time during which the oxidant gas is fed to the fuel cell stack 1 or the period of time during which the hydrogen-containing gas is fed to the fuel cell stack 1.

The method of determining the fuel cell stack 1 whose operating time is the shortest in step S301 may be to select the fuel cell stack 1 whose operating time is the shortest for each fuel cell system 100 and then determine the fuel cell stack 1 whose operating time is the shortest among the selected fuel cell stacks 1. It is also possible to use a method in which all of the fuel cell stacks 1 in the fuel cell system assembly 200 are compared with one another to determine the fuel cell stack 1 whose operating time is the shortest. Any method can be used as long as the fuel cell stack 1 whose operating time is the shortest in the fuel cell system assembly 200 can be determined.

The process (steps S) shown in the flowchart of FIG. 6 may be started upon power-on of the fuel cell system assembly 200 and thereafter be always carried out. Alternatively, the process may be carried out at start up and during power generation or only during power generation.

The predetermined amount of time used in step S303 for the change of the master power controller 2 may be any amount of time as long as marked deterioration of any particular fuel cell stack 1 is prevented. However, if the predetermined amount of time is set to a small amount of time, start up and shutdown of the fuel cell stack 1 could be repeated very often; thus, the predetermined amount of time is desirably set on the hour time scale rather than on the second or minute time scale.

Many modifications and other embodiments will be apparent to those skilled in the art from the foregoing description. It should therefore be understood that the foregoing description is illustrative only and is intended to teach best modes for carrying out the present invention to those skilled in the art.

### INDUSTRIAL APPLICABILITY

As described above, the present invention provides: a fuel cell system capable of grid-independent power generation in the event of power grid failure and capable of preventing any particular fuel cell stack from deteriorating to a greater degree than the other fuel cell stacks; and an assembly of such fuel cell systems. The present invention can be used in a wide variety of applications such as in fuel cell systems for household use or business use which are required to generate

## Claims

1. A fuel cell system comprising:
a plurality of fuel cell stacks (1A, 1B, 1C) that generate electric power using a hydrogen-containing gas and an oxidant gas;
a plurality of power controllers (2A, 2B, 2C) that are respectively connected to the plurality of fuel cell stacks (1A, 1B, 1C) and that extract electric power generated by the plurality of fuel cell stacks (1A, 1B, 1C), wherein
only one of the plurality of power controllers (2A, 2B, 2C) is set as a master power controller, while the one or more power controllers other than the master power controller are each set as a slave power controller,
the master power controller is capable of grid-independent operation during power grid failure; and
**characterized by**
a control device (3) that controls the operation of the plurality of fuel cell stacks (1A, 1B, 1C) and the operation of the plurality of power controllers (2A, 2B, 2C) so that the number of at least either the fuel cell stacks in operation or the power controllers in operation is varied as a function of a load to be driven, wherein
the fuel cell system is configured so that:
(i) the master power controller is set by the control device (3) so that the operating time of the one or more fuel cell stacks connected to the one or more slave power controllers is longer than the operating time of the fuel cell stack connected to the master power controller; or
(ii) the fuel cell system further comprises voltage measurement units (4A, 4B, 4C) that measure the respective voltages of the plurality of fuel cell stacks (1A, 1B, 1C), and when the voltage of the fuel cell stack connected to the power controller acting as the master power controller is below a predetermined value, one of the plurality of power controllers other than the power controller having acted as the master power controller is newly set as the master power controller by the control device (3).

2. The fuel cell system according to claim 1, wherein the fuel cell stack connected to the master power controller commences to generate electric power upon start up of the fuel cell system.

3. The fuel cell system according to claim 1 or 2, wherein the master power controller is not changed from one of the plurality of power controllers (2A, 2B, 2C) to another power controller during power grid failure.

4. The fuel cell system according to any one of claims 1 to 3, wherein, in the event of power grid failure,
the master power controller determines a voltage waveform to be generated, and
the one or more slave power controllers generate a voltage waveform in conformity with the voltage waveform determined by the master power controller.

5. The fuel cell system according to any one of claims 1 to 4, wherein
the master power controller is set by the control device (3) so that the operating time of the one or more fuel cell stacks connected to the one or more slave power controllers is longer than the operating time of the fuel cell stack connected to the master power controller, and
when a difference between the operating time of the fuel cell stack connected to the master power controller and the operating time of the fuel cell stack whose operating time is the shortest among the fuel cell stacks connected to the slave power controllers is equal to or greater than a predetermined amount of time, the fuel cell stack whose operating time is the shortest among the plurality of fuel cell stacks (1A, 1B, 1C) is caused to generate electric power while the power controller connected to the fuel cell stack whose operating time is the shortest among the plurality of fuel cell stacks (1A, 1B, 1C) is newly set as the master power controller.

6. The fuel cell system according to any one of claims 1 to 5, wherein the power controller connected to the fuel cell stack whose operating time is the shortest among the plurality of fuel cell stacks (1A, 1B, 1C) is set as the master power controller upon start up of the fuel cell system.

7. The fuel cell system according to any one of claims 1 to 6, wherein the power controller connected to the fuel cell stack for which a parameter is the highest among the plurality of fuel cell stacks (1A, 1B, 1C) is set as the master power controller upon start up of the fuel cell system, the parameter being correlated with the voltages of the fuel cell stacks (1A, 1B, 1C).

8. A fuel cell system assembly comprising a plurality of fuel cell systems (100A, 100B, 100C) each comprising: a plurality of fuel cell stacks (1A, 1B, 1C) that generate electric power using a hydrogen-containing gas and an oxidant gas; and a plurality of power controllers (2A, 2B, 2C) that are respectively connected to the plurality of fuel cell stacks (1A, 1B, 1C) and each of which extracts electric power generated by the fuel cell stack connected thereto, wherein
the plurality of fuel cell systems (100A, 100B, 100C) are configured to operate in conjunction with each other,
**characterized in that**
the fuel cell system assembly comprises an assembly control device (5) that controls the plurality of fuel cell stacks (1A, 1B, 1C) and the plurality of power controllers (2A, 2B, 2C) so that only one of the plurality of power controllers (2A, 2B, 2C) of the plurality of fuel cell systems (100A, 100B, 100C) is set as a master power controller, and
the assembly control device (5) sets, as the master power controller, one of the plurality of power controllers (2A, 2B, 2C) of the plurality of fuel cell systems (100A, 100B, 100C) that is connected to the fuel cell stack whose operating time is the shortest among the plurality of fuel cell stacks (1A, 1B, 1C) of the plurality of fuel cell systems (100A-100C), and
the master power controller is capable of grid-independent operation during power grid failure and, in the event of power grid failure, determines a voltage waveform to be generated.

9. The fuel cell system assembly according to claim 8, wherein
the master power controller is not changed from the one power controller to another power controller during power grid failure.

## Patentansprüche

1. Brennstoffzellensystem, umfassend:
eine Mehrzahl an Brennstoffzellenstapeln (1A, 1B, 1C), die elektrische Leistung unter Verwendung eines wasserstoffhaltigen Gases und eines Oxidationsgases erzeugen;
eine Mehrzahl an Leistungssteuerungen (2A, 2B, 2C) die jeweils mit der Mehrzahl an Brennstoffzellenstapeln (1A, 1B, 1C) verbunden sind und die von der Mehrzahl an Brennstoffzellenstapeln (1A, 1B, 1C) erzeugte elektrische Leistung extrahieren, wobei
nur eine der Mehrzahl an Leistungssteuerungen (2A, 2B, 2C) als Master-Leistungssteuerung eingestellt wird, wohingegen die eine oder mehreren Leistungssteuerungen, die sich von der Master-Leistungssteuerung unterscheiden, jeweils als eine Slave-Leistungssteuerung eingestellt werden,
die Master-Leistungssteuerung zum netzunabhängigen Betrieb während einer Leistungsnetzstörung fähig ist; und
**gekennzeichnet durch**
eine Steuervorrichtung (3), die den Betrieb der Mehrzahl an Brennstoffzellenstapel (1A, 1B, 1C) und den Betrieb der Mehrzahl an Leistungssteuerungen (2A, 2B, 2C) steuert, so dass die Anzahl von zumindest entweder den Brennstoffzellenstapeln im Betrieb oder den Leistungssteuerungen im Betrieb als Funktion einer anzutreibenden Last variiert wird,
wobei
das Brennstoffzellensystem eingerichtet ist, so dass:
(i) die Master-Leistungssteuerung durch die Steuervorrichtung (3) eingestellt wird, so dass die Betriebszeit des einen oder der mehreren Brennstoffzellenstapeln, die mit der einen oder den mehreren Slave-Leistungssteuerungen verbunden sind, länger ist als die Betriebszeit des Brennstoffzellenstapels, der mit der Master-Leistungssteuerung verbunden ist; oder
(ii) das Brennstoffzellensystem ferner Spannungsmesseinheiten (4A, 4B, 4C) umfasst, die die jeweiligen Spannungen der Mehrzahl an Brennstoffzellenstapel (1A, 1B, 1C) messen, und wenn die Spannung des Brennstoffzellenstapels, der mit der Leistungssteuerung, die als Master-Leistungssteuerung fungiert, verbunden ist, unter einem vorbestimmten Wert liegt, eine der Mehrzahl an Leistungssteuerungen ausgenommen der Leistungssteuerung, die als die Master-Leistungssteuerung fungiert hat, von der Steuervorrichtung (3) neu als die Master-Leistungssteuerung eingestellt wird.

2. Brennstoffzellensystem nach Anspruch 1, wobei der Brennstoffzellenstapel, der mit der Master-Leistungssteuerung verbunden ist, damit beginnt, beim Starten des Brennstoffzellensystems elektrische Leistung zu erzeugen.

3. Brennstoffzellensystem nach Anspruch 1 oder 2, wobei die Master-Leistungssteuerung während einer Leistungsnetzstörung nicht von einer der Mehrzahl an Leistungssteuerungen (2A, 2B, 2C) zu einer anderen Leistungssteuerung gewechselt wird.

4. Brennstoffzellensystem nach einem der Ansprüche 1 bis 3, wobei, im Fall einer Leistungsnetzstörung,
die Master-Leistungssteuerung eine zu erzeugende Spannungsform bestimmt, und
die eine oder mehreren Slave-Leistungssteuerungen eine Spannungsform in Übereinstimmung mit der von der Master-Leistungssteuerung bestimmten Spannungsform erzeugen.

5. Brennstoffzellensystem nach einem der Ansprüche 1 bis 4, wobei
die Master-Leistungssteuerung von der Steuervorrichtung (3) eingestellt wird, so dass die Betriebszeit der einen oder mehreren Brennstoffzellenstapel, die mit der einen oder mehreren Slave-Leistungssteuerungen verbunden sind, länger ist als die Betriebszeit des Brennstoffzellenstapels, der mit der Master-Leistungssteuerung verbunden ist, und
wenn ein Unterschied zwischen der Betriebszeit des Brennstoffzellenstapels, der mit der Master-Leistungssteuerung verbunden ist, und der Betriebszeit des Brennstoffzellenstapels, dessen Betriebszeit die kürzeste ist von den Brennstoffzellenstapeln, die mit den Slave-Leistungssteuerungen verbunden sind, gleich oder größer als eine vorbestimmte Zeitdauer ist, der Brennstoffzellenstapel, dessen Betriebszeit die kürzeste ist von der Mehrzahl an Brennstoffzellenstapeln (1A, 1B, 1C), veranlasst wird, elektrische Leistung zu erzeugen, während die Leistungssteuerung, die mit dem Brennstoffzellenstapel, dessen Betriebszeit die kürzeste ist von der Mehrzahl an Brennstoffzellenstapeln (1A, 1B, 1C), neu als die Master-Leistungssteuerung eingestellt wird.

6. Brennstoffzellensystem nach einem der Ansprüche 1 bis 5, wobei die Leistungssteuerung, die mit dem Brennstoffzellenstapel verbunden ist, dessen Betriebszeit die kürzeste ist von der Mehrzahl an Brennstoffzellenstapeln (1A, 1B, 1C), beim Starten des Brennstoffzellensystems als die Master-Leistungssteuerung eingestellt wird.

7. Brennstoffzellensystem nach einem der Ansprüche 1 bis 5, wobei die Leistungssteuerung, die mit dem Brennstoffzellenstapel verbunden ist, für den ein Parameter der größte ist von der Mehrzahl an Brennstoffzellenstapeln (1A, 1B, 1C), beim Starten des Brennstoffzellensystems als die Master-Leistungssteuerung eingestellt wird, wobei der Parameter mit den Spannungen der Brennstoffzellenstapel (1A, 1B, 1C) korreliert ist.

8. Brennstoffzellensystemanordnung die eine Mehrzahl an Brennstoffzellensystemen (100A, 100B, 100C) umfasst, die jeweils umfassen: eine Mehrzahl an Brennstoffzellenstapeln (1A, 1B, 1C), die elektrische Leistung unter Verwendung eines wasserstoffhaltigen Gases und eines Oxidationsgases erzeugen; und eine Mehrzahl an Leistungssteuerungen (2A, 2B, 2C), die jeweils mit der Mehrzahl an Brennstoffzellenstapeln (1A, 1B, 1C) verbunden sind und die jeweils von dem damit verbundenen Brennstoffzellenstapel erzeugte elektrische Leistung extrahieren, wobei
die Mehrzahl an Brennstoffzellensystemen (100A, 100B, 100C) eingerichtet sind, in Verbindung miteinander zu arbeiten,
**dadurch gekennzeichnet, dass**
die Brennstoffzellensystemanordnung eine Anordnungssteuervorrichtung (5) umfasst, die die Mehrzahl an Brennstoffzellenstapel (1A, 1B, 1C) und die Mehrzahl an Leistungssteuerungen (2A, 2B, 2C) steuert, so dass nur eine der Mehrzahl an Leistungssteuerungen (2A, 2B, 2C) von der Mehrzahl an Brennstoffzellensystemen (100A, 100B, 100C) als Master-Leistungssteuerung eingestellt wird, und
die Anordnungssteuervorrichtung (5) als die Master-Leistungssteuerung eine der Mehrzahl an Leistungssteuerungen (2A, 2B, 2C) von der Mehrzahl an Brennstoffzellensystemen (100A, 100B, 100C) einstellt, die mit dem Brennstoffzellenstapel verbunden ist, dessen Betriebszeit die kürzeste ist von der Mehrzahl an Brennstoffzellenstapeln (1A, 1B, 1C) von der Mehrzahl an Brennstoffzellensystemen (100A-100C), und
die Master-Leistungssteuerung zum netzunabhängigen Betrieb während einer Leistungsnetzstörung fähig ist und, im Fall einer Leistungsnetzstörung, eine zu erzeugente Spannungsform bestimmt.

9. Brennstoffzellensystemanordnung nach Anspruch 8, wobei
die Master-Leistungssteuerung während einer Leistungsnetzstörung nicht von der einen Leistungssteuerung zu einer anderen Leistungssteuerung gewechselt wird.

## Revendications

1. Système pile à combustible comprenant :
une pluralité d'empilements de piles à combustible (1A, 1B, 1C) qui génèrent de l'énergie électrique en utilisant du gaz contenant de l'hydrogène et un gaz oxydant ;
une pluralité de dispositifs de commande d'énergie (2A, 2B, 2C) qui sont respectivement reliés à la pluralité des empilements de piles à combustible (1A, 1B, 1C) et qui extraient l'énergie électrique générée par la pluralité des empilements de piles à combustible (1A, 1B, 1C), où
uniquement l'un de la pluralité des dispositifs de commande d'énergie (2A, 2B, 2C) est défini comme dispositif de commande d'énergie maître, tandis que lesdits dispositifs de commande d'énergie autres que le dispositif de commande d'énergie maître sont chacun définis comme dispositif de commande d'énergie esclave,
le dispositif de commande d'énergie maître est capable de fonctionnement indépendant du réseau durant une défaillance du réseau électrique ; et
**caractérisé par**
un dispositif de commande (3) qui commande le fonctionnement de la pluralité des empilements de piles à combustible (1A, 1B, 1C) et le fonctionnement de la pluralité des dispositifs de commande d'énergie (2A, 2B, 2C) de sorte que le nombre d'au moins soit les empilements de piles à combustible en fonctionnement soit les dispositifs de commande d'énergie en fonctionnement varient comme une fonction d'une charge à entraîner, où
le système pile à combustible est configuré afin que :
(i) le dispositif de commande d'énergie maître est défini par le dispositif de commande (3) de sorte que le temps de fonctionnement de l'un ou de plusieurs empilements de piles à combustible connectés à l'un ou plusieurs dispositifs de commande d'énergie esclaves est plus long que le temps de fonctionnement de l'empilement de piles à combustible connecté au dispositif de commande d'énergie maître ; ou
(ii) le système pile à combustible comprend en outre des unités de mesure de tension (4A, 4B, 4C) qui mesurent les tensions respectives de la pluralité des empilements de piles à combustible (1A, 1B, 1C), et lorsque la tension de l'empilement de piles à combustible connecté au dispositif de commande d'énergie agissant comme dispositif de commande d'énergie maître se situe en-dessous d'une valeur prédéterminée, l'un de la pluralité des dispositifs de commande d'énergie autres que le dispositif de commande d'énergie ayant agi comme dispositif de commande d'énergie maître est nouvellement défini comme dispositif de commande d'énergie maître par le dispositif de commande (3).

2. Système pile à combustible selon la revendication 1, dans lequel l'empilement de piles à combustible connecté au dispositif de commande d'énergie maître commence à générer de l'énergie électrique lors du démarrage du système pile à combustible.

3. Système pile à combustible selon la revendication 1 ou 2, dans lequel le dispositif de commande d'énergie maître n'est pas changé à partir de l'un de la pluralité des dispositifs de commande d'énergie (2A, 2B, 2C) vers un autre dispositif de commande d'énergie durant une défaillance du réseau électrique.

4. Système pile à combustible selon l'une quelconque des revendications 1 à 3, dans lequel, dans l'éventualité d'une défaillance du réseau électrique,
le dispositif de commande d'énergie maître détermine une forme d'onde de tension à générer, et
les un ou plusieurs dispositifs de commande d'énergie esclaves génèrent une forme d'onde de tension en conformité avec la forme d'onde de tension déterminée par le dispositif de commande d'énergie maître.

5. Système pile à combustible selon l'une quelconque des revendications 1 à 4, dans lequel
le dispositif de commande d'énergie maître est défini par le dispositif de commande (3) de sorte que le temps de fonctionnement du un ou plusieurs empilements de piles à combustible connectés aux un ou plusieurs dispositifs de commande d'énergie esclaves est plus long que le temps de fonctionnement de l'empilement de piles à combustible connecté au dispositif de commande d'énergie maître, et
lorsqu'une différence entre le temps de fonctionnement de l'empilement de piles à combustible connecté au dispositif de commande d'énergie maître et le temps de fonctionnement de l'empilement de piles à combustible dont le temps de fonctionnement est le plus court parmi les empilements de piles à combustible connectés aux dispositifs de commande d'énergie esclaves est supérieur ou égal à une quantité de temps prédéterminée, l'empilement de piles à combustible dont le temps de fonctionnement est le plus court parmi la pluralité des empilements de piles à combustible (1A, 1B, 1C) est amené à générer de l'énergie électrique tandis que le dispositif de commande d'énergie relié à l'empilement de piles à combustible dont le temps de fonctionnement est le plus court parmi la pluralité des empilements de piles à combustible (1A, 1B, 1C) est nouvellement défini comme le dispositif de commande d'énergie maître.

6. Système pile à combustible selon l'une quelconque des revendications 1 à 5, dans lequel le dispositif de commande d'énergie connecté à l'empilement de piles à combustible dont le temps de fonctionnement est le plus court parmi la pluralité des empilements de piles à combustible (1A, 1B, 1C) est défini comme le dispositif de commande d'énergie maître lors du démarrage du système pile à combustible.

7. Système pile à combustible selon l'une quelconque des revendications 1 à 6, dans lequel le dispositif de commande d'énergie connecté à l'empilement de piles à combustible pour lequel un paramètre est le plus haut parmi la pluralité des empilements de piles à combustible (1A, 1B, 1C) est défini comme le dispositif de commande d'énergie maître lors du démarrage du système pile à combustible, le paramètre étant corrélé aux tensions des empilements de piles à combustible (1A, 1B, 1C) .

8. Ensemble système pile à combustible comprenant une pluralité de systèmes piles à combustible (100A, 100B, 100C) comprenant chacun : une pluralité d'empilements de piles à combustible (1A, 1B, 1C) qui génèrent de l'énergie électrique en utilisant un gaz contenant de l'hydrogène et un gaz oxydant ; et une pluralité de dispositifs de commande d'énergie (2A, 2B, 2C) qui sont respectivement connectés à la pluralité des empilements de piles à combustible (1A, 1B, 1C) et dont chacun extrait l'énergie électrique générée par l'empilement de piles à combustible connecté à ceux-ci, où
la pluralité des systèmes piles à combustible (100A, 100B, 100C) sont configurés pour fonctionner en conjonction les uns avec les autres,
**caractérisé en ce que**
l'ensemble système pile à combustible comprend un dispositif de commande d'ensemble (5) qui commande la pluralité des empilements de piles à combustible (1A, 1B, 1C) et la pluralité des dispositifs de commande d'énergie (2A, 2B, 2C) de sorte que uniquement l'un de la pluralité des dispositifs de commande d'énergie (2A, 2B, 2C) de la pluralité des systèmes piles à combustible (100A, 100B, 100C) est défini comme un dispositif de commande d'énergie maître, et
le dispositif de commande d'ensemble (5) définit, comme dispositif de commande d'énergie maître, l'un de la pluralité des dispositifs de commande d'énergie (2A, 2B, 2C) de la pluralité des systèmes piles à combustible (100A, 100B, 100C) qui est connecté à l'empilement de piles à combustible dont le temps de fonctionnement est le plus court parmi la pluralité des empilements de piles à combustible (1A, 1B, 1C) de la pluralité des systèmes piles à combustible (100A-100C), et
le dispositif de commande d'énergie maître est capable d'un fonctionnement indépendant du réseau durant la défaillance du réseau électrique et, dans l'éventualité d'une défaillance du réseau électrique, détermine une forme d'onde de tension à générer.

9. Ensemble système pile à combustible selon la revendication 8, dans lequel
le dispositif de commande d'énergie maître n'est pas modifié d'un dispositif de commande d'énergie vers un autre dispositif de commande d'énergie durant une défaillance du réseau électrique.
